# EUROPEAN PATENT SPECIFICATION

(11) **EP 3 822 308 B1**
(45) Date of publication and mention of the grant of the patent: **05.03.2025**
(21) Application number: 19220080.6
(22) Date of filing: 30.12.2019
(51) Int. Cl.: C08J 11/04, C08L 19/00, C08L 21/00, C08C 19/08, C08C 19/20, C08L 17/00

(54) **RECYCLED RUBBER**
RECYCELTER KAUTSCHUK
CAOUTCHOUC RECYCLÉ

(30) Priority: 18.11.2019 TW 108141765
(43) Date of publication of application: 19.05.2021
(73) Proprietor: Industrial Technology Research Institute, 31057 Hsinchu (TW)
(72) Inventor: WEI, Yl-Ting, 302 Zhubei City, Hsinchu County (TW); WU, Jyh-Horng, 804 Kaohsiung City (TW); WU, Yao-Zu, 710 Tainan City (TW); LEU, Ming-Tsong, 709 Tainan-City (TW)
(74) Representative: Michalski Hüttermann & Partner Patentanwälte mbB

(56) References cited:
- EP-A1- 2 719 549
- GB-A- 1 455 932
- US-A1- 2004 064 005
- US-B1- 9 260 540

## Description

### TECHNICAL FIELD

The technical field relates to recycled rubber, and in particular it relates to a modifier of recycled rubber.

### BACKGROUND

The best way of treating waste rubber is recycling and reproduction. However, the existing method of recycling and reproduction has poor quality, bad reproduction factory environment, and high energy consumption. Accordingly, a depolymerization modifier should be developed to reduce the energy used by the recycling process, enhance the rubber's reproduction quality, and increase the applicability of depolymerized rubber.

US 2004/064005 A1 relates to processes for degradation for polymerized plastic products, refuge and plastics in general, to soluble non-toxic products, using mild chemical conditions. Specifically, a cost effective and easy way to prepare degradable compositions of plastics and other polymers containing the amino-sulfenyl, the oxygen-sulfenyl or the disulphide moieties is provided.

US 9 260 540 B1 describes a carbanionic polymer chain that contains polyene mer can be provided with a terminal functionality separated from the polymer chain by a sulfide linkage.

EP 2 719 549 A1 describes a functionalized elastomer having the formula I where R1, R2 and R3 are independently selected from a C1 to a C8 alkyl or a C1 to a C8 alkoxy, with the proviso that at least two of R1, R2 and R3 are a C1 to a C8 alkoxy; R4 is a C1 to a C8 alkanediyl, a C1 to a C8 arylene, a C1 to a C8 alkylarylene, a C1 to a C8 arylalkanediyl, or a covalent bond; R5 is a C2 alkanediyl; Si is silicon; X is sulfur or oxygen; P is a diene based elastomer; and n is 1 or 2.

### SUMMARY

The invention is defined by the features of the independent claim. Preferred embodiments are defined by the features of the dependent claims.

One embodiment of the disclosure provides recycled rubber, being formed by depolymerizing 100 parts by weight of rubber and 0.5 to 10 parts by weight of modifier, wherein the modifier is formed by reacting (a) R¹-M, (b) double bond monomer, (c) ethylene sulfide, and (d) polymerization terminator, wherein R¹ is C₄-C₁₆ alkyl group, M is Li, Na, K, Ba, or Mg and (b) double bond monomer is 1,3-butadiene, isoprene, 1,3-pentadiene, 2,3-dimethyl-1,3-butadiene, 2-methyl-1,3-pentadiene, 2,3-dimethyl-1,3-pentadiene, 2-phenyl-1,3-butadiene, 4,5-diethyl-1,3-octadiene, styrene, 1-ethylene naphthalene, 3-methylstyrene, 3,5-diethylstyrene, 4-propylstyrene, 2,4,6-trimethylstyrene, 4-dodecylstyrene, 3-methyl-5-n-hexylstyrene, 4-phenylstyrene, 2-ethyl-4-benzylstyrene, 3,5-diphenylstyrene, 2,3,4,5-tetraethyl styrene, 3-ethyl-1-vinylnaphthalene, 6-isopropyl-1-vinylnaphthalene, 6-cyclohexyl-1-vinylnaphthalene, 7-dodecyl-2-vinylnaphthalene, α-methyl styrene, or a combination thereof.

In some embodiments, (b) double bond monomer and (a) R1-M have a weight ratio of 100:0.01 to 100:5.

In some embodiments, (b) double bond monomer and (c) ethylene sulfide have a weight ratio of 100:1 to 100:5.

In some embodiments, (b) double bond monomer and (d) polymerization terminator have a weight ratio of 100:1 to 100:5.

In some embodiments, the modifier has a weight average molecular weight of 1000 to 400,000.

In some embodiments, the rubber includes poly(cis-1,3-butadiene) rubber, polystyrene-butadiene rubber, nitrile rubber, buna rubber, ethylene propylene rubber, butyl rubber, or a combination thereof.

In some embodiments, (b) double bond monomer is styrene.

In some embodiments, (b) double bond monomer is styrene and isoprene, and styrene and the isoprene are arranged in block or random.

In some embodiments, (b) double bond monomer is isoprene.

In some embodiments, the recycled rubber is further vulcanization crosslinked.

A detailed description is given in the following embodiments.

### DETAILED DESCRIPTION

In the following detailed description, for purposes of explanation, numerous specific details are set forth in order to provide a thorough understanding of the disclosed embodiments. It will be apparent, however, that one or more embodiments may be practised without these specific details.

One embodiment of the disclosure provides recycled rubber being formed by depolymerizing 100 parts by weight of rubber and 0.5 to 10 parts by weight of modifier. If the amount of the modifier is too low, the depolymerization quality cannot be improved. If the amount of the modifier is too high, the depolymerization quality is good, but the depolymerization quality cannot be further enhanced after the modifier amount achieves a certain degree. For example, the waste rubber and the depolymerization agent (e.g. the modifier) can be mixed by any known method in this field, such as thermo-mechanical mixing. The thermo-mechanical mixing steps often include a mechanical process at a depolymerization temperature in a mixer or an extruder for a suitable period of time. The suitable period of time of the thermo-mechanical work may vary based on the operation conditions and volume and properties of the components. For example, the thermo-mechanical work period can be from 1 minute to 60 minutes. In one embodiment, the depolymerization temperature can be 120°C to 350°C. If the depolymerization temperature is too low, the depolymerization period will be longer or even fail to depolymerize the rubber. If the depolymerization temperature is too high, over-depolymerization may occurr, degrading the recycled rubber quality and thereby lowering the tensile strength and elongation rate of the recycled rubber.

In one embodiment, the modifier is formed by reacting (a) R¹-M, (b) double bond monomer, (c) ethylene sulfide, and (d) polymerization terminator. (a) R¹-M serves as initiator to polymerize (b) double bond monomer. R¹ is C₄-C₁₆ alkyl group, and M is Li, Na, K, Ba, or Mg. In one embodiment, (b) double bond monomer is 1,3-butadiene, isoprene, 1,3-pentadiene, 2,3-dimethyl-1,3-butadiene, 2-methyl-1,3-pentadiene, 2,3-dimethyl-1,3-pentadiene, 2-phenyl-1,3-butadiene, 4,5-diethyl-1,3-octadiene, styrene, 1-ethylene naphthalene, 3-methylstyrene, 3,5-diethylstyrene, 4-propylstyrene, 2,4,6-trimethylstyrene, 4-dodecylstyrene, 3-methyl-5-n-hexylstyrene, 4-phenylstyrene, 2-ethyl-4-benzylstyrene, 3,5-diphenylstyrene, 2,3,4,5-tetraethyl styrene, 3-ethyl-1-vinylnaphthalene, 6-isopropyl-1-vinylnaphthalene, 6-cyclohexyl-1-vinylnaphthalene, 7-dodecyl-2-vinylnaphthalene, α-methyl styrene, or a combination thereof. After the polymerization is performed for a period, (c) ethylene sulfide can be added to react. Finally, (d) polymerization terminator can be added to terminate the reaction to obtain the so-called modifier. In one embodiment, (d) polymerization terminator can be butylated hydroxytoluene (BHT), butylated hydroxy anisole (BHA), tert-butylhydroquinone (TBHQ), propyl gallate (PG), ethoxyquinoline (EQ), hydroxymethyldibutylphenol (HMBP), Trihydroxybutyrophenone (THBP), octyl gallate (OG), dodecyl gallate (DG), hexyl resorcinol (4-HR), or n-dihydroguaiac acid (NDGA). In some embodiments, (b) double bond monomer is styrene. In some embodiments, (b) double bond monomer is styrene and isoprene, and styrene and the isoprene are arranged in block or random. In some embodiments, (b) double bond monomer is isoprene.

In some embodiments, (b) double bond monomer and (a) R¹-M have a weight ratio of 100:0.01 to 100:5. In one embodiment, (b) double bond monomer and (a) R¹-M have a weight ratio of 100:1 to 100:5. The amount of (a) R¹-M is varied on the basis of the required molecular weight of the synthesized rubber polymer and the precise polymerization temperature used to synthesize the rubber. One skilled in the art can easily determine the precise amount of (a) R¹-M for a polymer with an expected molecular weight. If the (a) R¹-M amount is too low, the reaction condition will be more rigorous, such as well-anhydrous solvent or reactor to prevent overly low yield (or even no reaction). If the (a) R¹-M amount is too high, the polymerization will produce a lot of heat, so that the reaction will be very dangerous due to the reaction temperature being out of control. In some embodiments, (b) double bond monomer and (c) ethylene sulfide have a weight ratio of 100:1 to 100:5. If the (c) ethylene sulfide amount is over the stoichiometry amount, it may increase the cost. However, (c) ethylene sulfide amount can be over the stoichiometry amount a bit in many conditions to ensure that each of the modifier molecules is functionalized without being influenced by water molecule. In some embodiments, (b) double bond monomer and (d) polymerization terminator have a weight ratio of 100:1 to 100:5. If the (d) polymerization terminator amount is too low, the reaction will not be terminated. If the (d) polymerization terminator amount is too high, the residual polymerization terminator will have a negative influence on the recycled rubber quality when the rubber is depolymerized thereafter.

In some embodiments, the modifier has a weight average molecular weight (Mw) of 1000 to 400000. In some embodiments, the modifier has a number average molecular weight (Mn) of 500 to 100000. If the molecular weight of the rubber is higher, the molecular weight of modifier should be higher. If Mw or Mn of the modifier is too low, the depolymerization of the vulcanized rubber will be very smelly. If Mw or Mn of the modifier is too high, the sulfur group content of the modifier will be too low, and the quality of the recycled rubber will be poor. In some embodiments, the modifier has polymer dispersity index (PDI, Mw/Mn) of 1.1 to 3.5. If the PDI of the modifier is too low, the processability of the recycled rubber will be poor, and the recycled rubber will be smelly. If the PDI of the modifier is too high, the quality of the recycled rubber will be poor.

In some embodiments, the rubber includes poly(cis-1,3-butadiene) rubber, polystyrene-butadiene rubber, nitrile rubber, buna rubber, ethylene propylene rubber, butyl rubber, or a combination thereof.

In some embodiments, the recycled rubber can be further vulcanization crosslinked. For example, sulfur or other crosslinker can be added as needed to crosslink the recycled rubber, such that the properties of the recycled rubber are further adjusted to meet product specifications.

Below, exemplary embodiments will be described in detail so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

### EXAMPLES

### Synthesis Example 1 (PSPISH-Block-High Mw)

7.5g of styrene was dissolved in 20.0mL of toluene, and 2.3mL of n-butyl lithium (C₄H₉Li) was then added into the toluene solution to initiate polymerization at room temperature for 20 minutes. Subsequently, 9.8g of isoprene was added into the above reaction, and reacted at room temperature for 120 minutes to form poly(styrene-b-isoprene) block copolymer. 4.8mL of ethylene sulfide was added into the above reaction, and reacted at room temperature for 120 minutes. Finally, an isopropyl alcohol solution of butylated hydroxytoluene (BHT) (0.1g/100mL) serving as polymerization terminator was added into the above reaction, and reacted at room temperature for 5 minutes to terminate the reaction.

The crude product was added into a lot of distilled water, stirred for 1 hour, and then stood to separate into two layers. The upper layer was extracted, and distilled water was added to the upper layer to perform extraction 3 times to ensure that the salt in the upper layer was completely removed. The upper layer was dropwisely added into a lot of ethanol to precipitate solid. The solid was collected and put into a vacuum oven at 40°C for 24 hours, thereby obtaining a pale yellow modifier. The modifier was analyzed by gel permeation chromatography (GPC) to measure its weight average molecular weight (Mw) of 306100, number average molecular weight (Mn) of 91150, and polymer dispersity index (PDI, Mw/Mn) of 3.36.

### Synthesis Example 2 (PSPISH-Block-Low Mw)

7.5g of styrene was dissolved in 100.0mL of toluene, and 2.3mL of n-butyl lithium (C₄H₉Li) was then added into the toluene solution to initiate polymerization at room temperature for 10 minutes. Subsequently, 9.8g of isoprene was added into the above reaction, and reacted at room temperature for 20 minutes to form poly(styrene-b-isoprene) block copolymer. 4.8mL of ethylene sulfide was added into the above reaction, and reacted at room temperature for 20 minutes. Finally, an isopropyl alcohol solution of BHT (0.1g/100mL) serving as polymerization terminator was added into the above reaction, and reacted at room temperature for 5 minutes to terminate the reaction.

The crude product was added into a lot of distilled water, stirred for 1 hour, and then stood to separate into two layers. The upper layer was extracted, and distilled water was added to the upper layer to perform extraction 3 times to ensure that the salt in the upper layer was completely removed. The upper layer was dropwisely added into a lot of ethanol to precipitate solid. The solid was collected and put into a vacuum oven at 40°C for 24 hours, thereby obtaining a pale yellow modifier. The modifier was analyzed by GPC to measure its Mw of 1140, Mn of 670, and PDI of 1.7.

### Synthesis Example 3 (PSPISH-Random)

30g of styrene and 21g of isoprene were dissolved in 20.0mL of toluene, and 6.0mL of n-butyl lithium (C₄H₉Li) was then added into the mixture solution of styrene and isoprene to initiate polymerization in ice bath for 20 minutes to form poly(styrene-isoprene) random copolymer. 0.6mL of ethylene sulfide was added into the above reaction, and reacted at room temperature for 120 minutes. Finally, an isopropyl alcohol solution of BHT (0.1g/100mL) serving as polymerization terminator was added into the above reaction, and reacted at room temperature for 5 minutes to terminate the reaction.

The crude product was added into a lot of distilled water, stirred for 1 hour, and then stood to separate into two layers. The upper layer was extracted, and distilled water was added to the upper layer to perform extraction 3 times to ensure that the salt in the upper layer was completely removed. The upper layer was dropwisely added into a lot of ethanol to precipitate solid. The solid was collected and put into a vacuum oven at 40°C for 24 hours, thereby obtaining a pale yellow modifier. The modifier was analyzed by GPC to measure its Mw of 19030, Mn of 14600, and PDI of 1.30.

### Synthesis Example 4 (PSSH)

25g of styrene was dissolved in 40mL of toluene, and 1.5mL of n-butyl lithium (C₄H₉Li) was then added into the solution of styrene to initiate polymerization at room temperature for 150 minutes to form polystyrene. 1.3mL of ethylene sulfide was added into the above reaction, and reacted at room temperature for 24 hours. Finally, an isopropyl alcohol solution of BHT (0.1g/100mL) serving as polymerization terminator was added into the above reaction, and reacted at room temperature for 5 minutes to terminate the reaction.

The crude product was added into a lot of distilled water, stirred for 1 hour, and then stood to separate into two layers. The upper layer was extracted, and distilled water was added to the upper layer to perform extraction 3 times to ensure that the salt in the upper layer was completely removed. The upper layer was dropwisely added into a lot of ethanol to precipitate solid. The solid was collected and put into a vacuum oven at 40°C for 24 hours, thereby obtaining a white modifier. The modifier was analyzed by GPC to measure its Mw of 1245, Mn of 986, and PDI of 1.26.

### Synthesis Example 5 (PISH)

20g of isoprene was added into a anhydrous rounded bottom bottle, and 6.0mL of n-butyl lithium (C₄H₉Li) was then added into isoprene to initiate polymerization in a water bath for 60 minutes to form a polyisoprene random copolymer. 0.8mL of ethylene sulfide was added into the above reaction, and reacted at room temperature for 120 minutes. Finally, an isopropyl alcohol solution of BHT (0.1g/100mL) serving as polymerization terminator was added into the above reaction, and reacted at room temperature for 5 minutes to terminate the reaction.

The crude product was added into a lot of distilled water, stirred for 1 hour, and then stood to separate into two layers. The upper layer was extracted, and distilled water was added to the upper layer to perform extraction 3 times to ensure that the salt in the upper layer was completely removed. The upper layer was dropwisely added into a lot of ethanol to precipitate solid. The solid was collected and put into a vacuum oven at 40°C for 24 hours, thereby obtaining a pale yellow modifier. The modifier was analyzed by GPC to measure its Mw of 5665, Mn of 4304, and PDI of 1.30.

### Comparative Example 1-1

40g of waste rubber (recycled from batch A of whole tire from minibus) was added to a plastometer (plasti-corder PL2000) for depolymerization at 210°C and 70rpm to obtain recycled rubber. The depolymerization was repeated 3 times to obtain about 120g of the recycled rubber. The recycled rubber was refined by double rollers at 40°C and 30rpm for 8 minutes to obtain a sheet. 10g of the sheet was sampled to measure its solute content of 20% (according to ASTM5667) and crosslink degree of 3.50 (according to ASTM 6814-02). 100g of the sheet was vulcanization crosslinked according to JIS standard (JIS K6313-2012), and the vulcanization crosslinked sheet was analyzed to measure its tensile strength of 6.01MPa and elongation rate of 74%.

### Comparative Example 1-2

40g of waste rubber (similar to the waste rubber in Comparative Example 1-1) and 1phr of BHT (serving as anti-oxidant) were added to a plastometer (plasti-corder PL2000) for depolymerization at 210°C and 70rpm to obtain recycled rubber. The depolymerization was repeated 3 times to obtain about 120g of the recycled rubber. The recycled rubber was refined by double rollers at 40°C and 30rpm for 8 minutes to obtain a sheet. 10g of the sheet was sampled to measure its solute content of 17% (according to ASTM5667) and crosslink degree of 2.97 (according to ASTM 6814-02). 100g of the sheet was vulcanization crosslinked according to JIS standard (JIS K6313-2012), and the vulcanization crosslinked sheet was analyzed to measure its tensile strength of 7.63MPa and elongation rate of 86%.

### Comparative Example 1-3

40g of waste rubber (similar to the waste rubber in Comparative Example 1-1), 1phr of BHT (serving as anti-oxidant), and 1phr of 2-mercaptobenzimidazole (MMBI, 98%, commercially available from Aldrich, serving as a vulcanization retarder) were added to a plastometer (plasti-corder PL2000) for depolymerization at 210°C and 70rpm to obtain recycled rubber. The depolymerization was repeated 3 times to obtain about 120g of the recycled rubber. The recycled rubber was refined by double rollers at 40°C and 30rpm for 8 minutes to obtain a sheet. 10g of the sheet was sampled to measure its solute content of 8% (according to ASTM5667) and crosslink degree of 3.02 (according to ASTM 6814-02). 100g of the sheet was vulcanization crosslinked according to JIS standard (JIS K6313-2012), and the vulcanization crosslinked sheet was analyzed to measure its tensile strength of 7.18MPa and elongation rate of 101%.

### Example 1 (PSPISH-Block-High Mw)

40g of waste rubber (similar to the waste rubber in Comparative Example 1-1), 1phr of the modifier of Synthesis Example 1, 1phr of BHT (serving as anti-oxidant), and 1phr of MMBI (serving as a vulcanization retarder) were added to a plastometer (plasti-corder PL2000) for depolymerization at 210°C and 70rpm to obtain recycled rubber. The depolymerization was repeated 3 times to obtain about 120g of the recycled rubber. The recycled rubber was refined by double rollers at 40°C and 30rpm for 8 minutes to obtain a sheet. 10g of the sheet was sampled to measure its solute content of 9% (according to ASTM5667) and crosslink degree of 3.06 (according to ASTM 6814-02). 100g of the sheet was vulcanization crosslinked according to JIS standard (JIS K6313-2012), and the vulcanization crosslinked sheet was analyzed to measure its tensile strength of 9.02MPa and elongation rate of 126%.

### Example 2 (PSPISH-Block-Low Mw)

40g of waste rubber (similar to the waste rubber in Comparative Example 1-1), 1phr of the modifier of Synthesis Example 2, 1phr of BHT (serving as anti-oxidant), and 1phr of MMBI (serving as a vulcanization retarder) were added to a plastometer (plasti-corder PL2000) for depolymerization at 210°C and 70rpm to obtain recycled rubber. The depolymerization was repeated 3 times to obtain about 120g of the recycled rubber. The recycled rubber was refined by double rollers at 40°C and 30rpm for 8 minutes to obtain a sheet. 10g of the sheet was sampled to measure its solute content of 8% (according to ASTM5667) and crosslink degree of 3.08 (according to ASTM 6814-02). 100g of the sheet was vulcanization crosslinked according to JIS standard (JIS K6313-2012), and the vulcanization crosslinked sheet was analyzed to measure its tensile strength of 8.22MPa and elongation rate of 103%.

### Example 3 (PSPISH-Random)

40g of waste rubber (similar to the waste rubber in Comparative Example 1-1), 1phr of the modifier of Synthesis Example 3, 1phr of BHT (serving as anti-oxidant), and 1phr of MMBI (serving as a vulcanization retarder) were added to a plastometer (plasti-corder PL2000) for depolymerization at 210°C and 70rpm to obtain recycled rubber. The depolymerization was repeated 3 times to obtain about 120g of the recycled rubber. The recycled rubber was refined by double rollers at 40°C and 30rpm for 8 minutes to obtain a sheet. 10g of the sheet was sampled to measure its solute content of 6% (according to ASTM5667) and crosslink degree of 3.12 (according to ASTM 6814-02). 100g of the sheet was vulcanization crosslinked according to JIS standard (JIS K6313-2012), and the vulcanization crosslinked sheet was analyzed to measure its tensile strength of 9.37MPa and elongation rate of 89%.

### Example 4 (PSSH)

40g of waste rubber (similar to the waste rubber in Comparative Example 1-1), 1phr of the modifier of Synthesis Example 4, 1phr of BHT (serving as anti-oxidant), and 1phr of MMBI (serving as a vulcanization retarder) were added to a plastometer (plasti-corder PL2000) for depolymerization at 210°C and 70rpm to obtain recycled rubber. The depolymerization was repeated 3 times to obtain about 120g of the recycled rubber. The recycled rubber was refined by double rollers at 40°C and 30rpm for 8 minutes to obtain a sheet. 10g of the sheet was sampled to measure its solute content of 4% (according to ASTM5667) and crosslink degree of 3.7 (according to ASTM 6814-02). 100g of the sheet was vulcanization crosslinked according to JIS standard (JIS K6313-2012), and the vulcanization crosslinked sheet was analyzed to measure its tensile strength of 8.29MPa and elongation rate of 128%.

### Example 5 (PISH)

40g of waste rubber (similar to the waste rubber in Comparative Example 1-1), 1phr of the modifier of Synthesis Example 5, 1phr of BHT (serving as anti-oxidant), and 1phr of MMBI (serving as a vulcanization retarder) were added to a plastometer (plasti-corder PL2000) for depolymerization at 210°C and 70rpm to obtain recycled rubber. The depolymerization was repeated 3 times to obtain about 120g of the recycled rubber. The recycled rubber was refined by double rollers at 40°C and 30rpm for 8 minutes to obtain a sheet. 10g of the sheet was sampled to measure its solute content of 5% (according to ASTM5667) and crosslink degree of 3.17 (according to ASTM 6814-02). 100g of the sheet was vulcanization crosslinked according to JIS standard (JIS K6313-2012), and the vulcanization crosslinked sheet was analyzed to measure its tensile strength of 8.77MPa and elongation rate of 141%.

The properties of Comparative Examples 1-1 to 1-3 and Examples 1 to 5 are shown in Table 1.

**Table 1**

| | BHT (PHR) | MMBI (PHR) | Modifier (PHR) | Solute content | Crosslink degree | Tensile strength (MPa) | Increase ratio | Elongation rate (%) | Increase ratio |
|---|---|---|---|---|---|---|---|---|---|
| Comparative Example 1-1 | 0 | 0 | 0 | 20% | 3.50 | 6.01 | 0 | 74 | 0 |
| Comparative Example 1-2 | 1 | 0 | 0 | 17% | 2.97 | 7.63 | 27% | 86 | 16% |
| Comparative Example 1-3 | 1 | 1 | 0 | 8% | 3.02 | 7.18 | 19% | 101 | 36% |
| Example 1 | 1 | 1 | 1 | 9% | 3.06 | 9.20 | 53% | 142 | 92% |
| Example 2 | 1 | 1 | 1 | 8% | 3.08 | 8.22 | 37% | 103 | 39% |
| Example 3 | 1 | 1 | 1 | 6% | 3.12 | 9.37 | 56% | 89 | 20% |
| Example 4 | 1 | 1 | 1 | 4% | 3.78 | 8.29 | 38% | 128 | 73% |
| Example 5 | 1 | 1 | 1 | 5% | 3.17 | 8.77 | 46% | 141 | 90% |

As shown in Comparison of Table 1, the modifier in Example 1 may greatly enhance the tensile strength of the recycled rubber.

### Comparative Example 2-1

40g of waste rubber (recycled from batch B of whole tire from minibus), 1phr of diphenyl disulfide (DPDS, 99%, commercially available from Aldrich, serving as modifier), 1phr of BHT (serving as anti-oxidant), and 1phr of MMBI (serving as a vulcanization retarder) were added to a plastometer (plasti-corder PL2000) for depolymerization at 210°C and 70rpm to obtain recycled rubber. The depolymerization was repeated 3 times to obtain about 120g of the recycled rubber. The recycled rubber was refined by double rollers at 40°C and 30rpm for 8 minutes to obtain a sheet. 10g of the sheet was sampled to measure its solute content of 20% (according to ASTM5667), crosslink degree of 3.48 (according to ASTM 6814-02), and decrosslink degree of 76.8% (according to ASTM 6814-02). 100g of the sheet was vulcanization crosslinked according to JIS standard (JIS K6313-2012), and the vulcanization crosslinked sheet was analyzed to measure its tensile strength of 6.06MPa and elongation rate of 98%.

### Comparative Example 2-2

40g of waste rubber (recycled from batch B of whole tire from minibus), 1phr of bis(2-benzamidophenyl) disulfide (PiTong 22, commercially available from ShunLi, serving as modifier), 1phr of BHT (serving as anti-oxidant), and 1phr of MMBI (serving as a vulcanization retarder) were added to a plastometer (plasti-corder PL2000) for depolymerization at 210°C and 70rpm to obtain recycled rubber. The depolymerization was repeated 3 times to obtain about 120g of the recycled rubber. The recycled rubber was refined by double rollers at 40°C and 30rpm for 8 minutes to obtain a sheet. 10g of the sheet was sampled to measure its solute content of 20% (according to ASTM5667), crosslink degree of 3.183 (according to ASTM 6814-02), and decrosslink degree of 78.8% (according to ASTM 6814-02). 100g of the sheet was vulcanization crosslinked according to JIS standard (JIS K6313-2012), and the vulcanization crosslinked sheet was analyzed to measure its tensile strength of 7.73MPa and elongation rate of 103.17%.

Example 6

40g of waste rubber (recycled from batch B of whole tire from minibus), 1phr of the modifier of Synthesis Example 1, 1phr of BHT (serving as anti-oxidant), and 1phr of MMBI (serving as a vulcanization retarder) were added to a plastometer (plasti-corder PL2000) for depolymerization at 210°C and 70rpm to obtain recycled rubber. The depolymerization was repeated 3 times to obtain about 120g of the recycled rubber. The recycled rubber was refined by double rollers at 40°C and 30rpm for 8 minutes to obtain a sheet. 10g of the sheet was sampled to measure its solute content of 17% (according to ASTM5667), crosslink degree of 3.03 (according to ASTM 6814-02), and decrosslink degree of 79.8% (according to ASTM 6814-02). 100g of the sheet was vulcanization crosslinked according to JIS standard (JIS K6313-2012), and the vulcanization crosslinked sheet was analyzed to measure its tensile strength of 9.81MPa and elongation rate of 122.37%.

The properties of Comparative Examples 2-1 and 2-2 and Example 6 are shown in Table 2.

**Table 2**

| | Modifier (PHR) | Solute content | Crosslink degree | Decrosslink degree | Tensile strength (MPa) | Increase ratio | Elongation rate (%) | Increase ratio |
|---|---|---|---|---|---|---|---|---|
| Comparative Example 2-1 | DPDS | 20% | 3.48 | 76.8% | 6.06 | 0 | 97.99 | 0 |
| Comparative Example 2-2 | PiTong 22 | 20% | 3.183 | 78.8 | 7.73 | 27.5% | 103.17 | 5.3% |
| Example 6 | Synthesis Example 1 | 17% | 3.03 | 79.8 | 9.81 | 61.8% | 122.37 | 24.9% |

As shown in Comparison of Table 2, the modifier in Example 6 may greatly enhance the tensile strength and elongation rate of the recycled rubber compared to the commercially available modifiers.

### Comparative Example 3-1

40g of waste rubber (recycled from cover tire from trunk) was added to a plastometer (plasti-corder PL2000) for depolymerization at 210°C and 70rpm to obtain recycled rubber. The depolymerization was repeated 3 times to obtain about 120g of the recycled rubber. The recycled rubber was refined by double rollers at 40°C and 30rpm for 8 minutes to obtain a sheet. 10g of the sheet was sampled to measure its solute content of 6% (according to ASTM5667), crosslink degree of 3.27 (according to ASTM 6814-02), and decrosslink degree of 81% (according to ASTM 6814-02). 100g of the sheet was vulcanization crosslinked according to JIS standard (JIS K6313-2012), and the vulcanization crosslinked sheet was analyzed to measure its tensile strength of 5.99MPa and elongation rate of 61%.

### Comparative Example 3-2

40g of waste rubber (recycled from cover tire from trunk) and 1phr of MMBI (serving as a vulcanization retarder) were added to a plastometer (plasti-corder PL2000) for depolymerization at 210°C and 70rpm to obtain recycled rubber. The depolymerization was repeated 3 times to obtain about 120g of the recycled rubber. The recycled rubber was refined by double rollers at 40°C and 30rpm for 8 minutes to obtain a sheet. 10g of the sheet was sampled to measure its solute content of 7% (according to ASTM5667), crosslink degree of 3.09 (according to ASTM 6814-02), and decrosslink degree of 82% (according to ASTM 6814-02). 100g of the sheet was vulcanization crosslinked according to JIS standard (JIS K6313-2012), and the vulcanization crosslinked sheet was analyzed to measure its tensile strength of 9.65MPa and elongation rate of 154%.

### Comparative Example 3-3

40g of waste rubber (recycled from cover tire from trunk), 1phr of BHT (serving as anti-oxidant), and 1phr of MMBI (serving as a vulcanization retarder) were added to a plastometer (plasti-corder PL2000) for depolymerization at 210°C and 70rpm to obtain recycled rubber. The depolymerization was repeated 3 times to obtain about 120g of the recycled rubber. The recycled rubber was refined by double rollers at 40°C and 30rpm for 8 minutes to obtain a sheet. 10g of the sheet was sampled to measure its solute content of 5% (according to ASTM5667), crosslink degree of 3.03 (according to ASTM 6814-02), and decrosslink degree of 83% (according to ASTM 6814-02). 100g of the sheet was vulcanization crosslinked according to JIS standard (JIS K6313-2012), and the vulcanization crosslinked sheet was analyzed to measure its tensile strength of 9.93MPa and elongation rate of 143%.

### Example 7

40g of waste rubber (recycled from cover tire from trunk), 1phr of the modifier of Synthesis Example 1, 1phr of BHT (serving as anti-oxidant), and 1phr of MMBI (serving as a vulcanization retarder) were added to a plastometer (plasti-corder PL2000) for depolymerization at 210°C and 70rpm to obtain recycled rubber. The depolymerization was repeated 3 times to obtain about 120g of the recycled rubber. The recycled rubber was refined by double rollers at 40°C and 30rpm for 8 minutes to obtain a sheet. 10g of the sheet was sampled to measure its solute content of 6% (according to ASTM5667), crosslink degree of 2.62 (according to ASTM 6814-02), and decrosslink degree of 85% (according to ASTM 6814-02). 100g of the sheet was vulcanization crosslinked according to JIS standard (JIS K6313-2012), and the vulcanization crosslinked sheet was analyzed to measure its tensile strength of 11.66MPa and elongation rate of 124%.

The properties of Comparative Examples 3-1 to 3-3 and Example 7 are shown in Table 3.

As shown in Comparison of Table 3, the modifier in Example 7 may greatly enhance the tensile strength of the recycled rubber compared to the commercially available modifiers.

As shown in Examples 1, 6, and 7, the modifier can be used in the same rubber type from different sources (Examples 1 and 6), and can be used in different rubber types (Examples 6 and 7).

**Table 3**

| | MMBI (1PHR) | BHT (1PHR) | Modifier (1PHR) | Solute content | Crosslink degree | Tensile strength (MPa) | Increase ratio | Elongation rate (%) | Increase ratio |
|---|---|---|---|---|---|---|---|---|---|
| Comparative Example 3-1 | 0 | 0 | 0 | 6% | 3.27 | 5.99 | 0 | 67 | 0 |
| Comparative Example 3-2 | 1 | 0 | 0 | 7% | 3.09 | 9.65 | 61 | 154 | 198 |
| Comparative Example 3-3 | 1 | 1 | 0 | 5% | 3.03 | 9.93 | 66 | 143 | 113 |
| Example 7 | 1 | 1 | 1 | 6% | 2.62 | 11.66 | 95 | 124 | 85 |

## Claims

1. Recycled rubber, being formed by
depolymerizing 100 parts by weight of rubber and 0.5 to 10 parts by weight of modifier,
wherein the modifier is formed by reacting (a) R¹-M, (b) double bond monomer, (c) ethylene sulfide, and (d) polymerization terminator,
wherein R¹ is C₄-C₁₆ alkyl group, M is Li, Na, K, Ba, or Mg and (b) double bond monomer is 1,3-butadiene, isoprene, 1,3-pentadiene, 2,3-dimethyl-1,3-butadiene, 2-methyl-1,3-pentadiene, 2,3-dimethyl-1,3-pentadiene, 2-phenyl-1,3-butadiene, 4,5-diethyl-1,3-octadiene, styrene, 1-ethylene naphthalene, 3-methylstyrene, 3,5-diethylstyrene, 4-propylstyrene, 2,4,6-trimethylstyrene, 4-dodecylstyrene, 3-methyl-5-n-hexylstyrene, 4-phenylstyrene, 2-ethyl-4-benzylstyrene, 3,5-diphenylstyrene, 2,3,4,5-tetraethyl styrene, 3-ethyl-1-vinylnaphthalene, 6-isopropyl-1-vinylnaphthalene, 6-cyclohexyl-1-vinylnaphthalene, 7-dodecyl-2-vinylnaphthalene, α-methyl styrene, or a combination thereof.

2. The recycled rubber as claimed in claim 1, wherein (b) double bond monomer and (a) R¹-M have a weight ratio of 100:0.01 to 100:5.

3. The recycled rubber as claimed in claim 1 or 2, wherein (b) double bond monomer and (c) ethylene sulfide have a weight ratio of 100:1 to 100:5.

4. The recycled rubber as claimed in any one of claims 1 to 3, wherein (b) double bond monomer and (d) polymerization terminator have a weight ratio of 100:1 to 100:5.

5. The recycled rubber as claimed in any one of claims 1 to 4, wherein the rubber comprises poly(cis-1,3-butadiene) rubber, polystyrene-butadiene rubber, nitrile rubber, buna rubber, ethylene propylene rubber, butyl rubber, or a combination thereof.

6. The recycled rubber as claimed in any one of claims 1 to 5, wherein (b) double bond monomer is styrene.

7. The recycled rubber as claimed in any one of claims 1 to 5, wherein (b) double bond monomer is styrene and isoprene, and styrene and the isoprene are arranged in block or random.

8. The recycled rubber as claimed in any one of claims 1 to 5, wherein (b) double bond monomer is isoprene.

9. The recycled rubber as claimed in any one of claims 1 to 8, being further vulcanization crosslinked.

## Patentansprüche

1. Recycelter Kautschuk, gebildet durch
Depolymerisieren von 100 Gewichtsteilen Kautschuk und 0,5 bis 10 Gewichtsteilen Modifizierungsmittel,
wobei das Modifizierungsmittel durch Umsetzen von (a) R¹-M, (b) Monomer mit Doppelbindung, (c) Ethylensulfid und (d) einem Polymerisierungsabbruchmittel gebildet wird,
wobei R¹ eine C₄-C₁₆-Alkylgruppe ist, M für Li, Na, K, Ba oder Mg steht und (b) Monomer mit Doppelbindung 1,3-Butadien, Isopren, 1,3-Pentadien, 2,3-Dimethyl-1,3-butadien, 2-Methyl-1,3-pentadien, 2,3-Dimethyl-1,3-pentadien, 2-Phenyl-1,3-butadien, 4,5-Diethyl-1,3-octadien, Styrol, 1-Ethylennaphthalen, 3-Methylstyrol, 3,5-Diethylstyrol, 4-Propylstyrol, 2,4,6-Trimethylstyrol, 4-Dodecylstyrol, 3-Methyl-5-n-hexylstyrol, 4-Phenylstyrol, 2-Ethyl-4-benzylstyrol, 3,5-Diphenylstyrol, 2,3,4,5-Tetraethylstyrol, 3-Ethyl-1-vinylnaphthalen, 6-Isopropyl-1-vinylnaphthalen, 6-Cyclohexyl-1-vinylnaphthalen, 7-Dodecyl-2-vinylnaphthalen, α-Methylstyrol oder eine Kombination davon ist.

2. Recycelter Kautschuk nach Anspruch 1, wobei (b) Monomer mit Doppelbindung und (a) R¹-M ein Gewichtsverhältnis von 100:0,01 bis 100:5 aufweisen.

3. Recycelter Kautschuk nach Anspruch 1 oder 2, wobei (b) Monomer mit Doppelbindung und (c) Ethylensulfid ein Gewichtsverhältnis von 100:1 bis 100:5 aufweisen.

4. Recycelter Kautschuk nach einem der Ansprüche 1 bis 3, wobei (b) Monomer mit Doppelbindung und (d) Polymerisationsabbruchmittel ein Gewichtsverhältnis von 100:1 bis 100:5 aufweisen.

5. Recycelter Kautschuk nach einem der Ansprüche 1 bis 4, wobei der Kautschuk Poly(cis-1,3-butadien)-Kautschuk, Polystyrol-Butadien-Kautschuk, Nitrilkautschuk, Bunakautschuk, Ethylen-Propylen-Kautschuk, Butylkautschuk oder eine Kombination davon umfasst.

6. Recycelter Kautschuk nach einem der Ansprüche 1 bis 5, wobei (b) Monomer mit Doppelbindung Styrol ist.

7. Recycelter Kautschuk nach einem der Ansprüche 1 bis 5, wobei (b) Monomer mit Doppelbindung Styrol und Isopren ist und Styrol und das Isopren blockweise oder zufällig angeordnet sind.

8. Recycelter Kautschuk nach einem der Ansprüche 1 bis 5, wobei (b) Monomer mit Doppelbindung Isopren ist.

9. Recycelter Kautschuk nach einem der Ansprüche 1 bis 8, der ferner durch Vulkanisation vernetzt ist.

## Revendications

1. Caoutchouc recyclé, formé en
dépolymérisant 100 parts en masse de caoutchouc et 0,5 à 10 parts en masse de modificateur,
dans lequel le modificateur est formé en faisant réagir (a) R¹-M, (b) un monomère à double liaison, (c) du sulfure d'éthylène et (d) un agent de terminaison de polymérisation,
dans lequel R¹ représente un groupement alkyle en C₄-C₁₆, M représente Li, Na, K, Ba ou Mg et (b) le monomère à double liaison est le 1,3-butadiène, l'isoprène, le 1,3-pentadiène, le 2,3-diméthyl-1,3-butadiène, le 2-méthyl-1,3-pentadiène, le 2,3-diméthyl-1,3-pentadiène, le 2-phényl-1,3-butadiène, le 4,5-diéthyl-1,3-octadiène, le styrène, le 1-éthylène naphtalène, le 3-méthylstyrène, le 3,5-diéthylstyrène, le 4-propylstyrène, le 2,4,6-triméthylstyrène, le 4-dodécylstyrène, le 3-méthyl-5-n-hexylstyrène, le 4-phénylstyrène, le 2-éthyl-4-benzylstyrène, le 3,5-diphénylstyrène, le 2,3,4,5-tétraéthylstyrène, le 3-éthyl-1-vinylnaphtalène, le 6-isopropyl-1-vinylnaphtalène, le 6-cyclohexyl-1-vinylnaphtalène, le 7-dodécyl-2-vinylnaphtalène, le α-méthylstyrène ou une combinaison de ceux-ci.

2. Caoutchouc recyclé selon la revendication 1, dans lequel (b) le monomère à double liaison et (a) R¹-M ont un rapport massique de 100:0,01 à 100:5.

3. Caoutchouc recyclé selon la revendication 1 ou 2, dans lequel (b) le monomère à double liaison et (c) le sulfure d'éthylène ont un rapport massique de 100:1 à 100:5.

4. Caoutchouc recyclé selon l'une quelconque des revendications 1 à 3, dans lequel (b) le monomère à double liaison et (d) un agent de terminaison de polymérisation ont un rapport massique de 100:1 à 100:5.

5. Caoutchouc recyclé selon l'une quelconque des revendications 1 à 4, dans lequel le caoutchouc comprend un caoutchouc poly(cis-1,3-butadiène), un caoutchouc polystyrène-butadiène, un caoutchouc nitrile, un caoutchouc Buna, un caoutchouc d'éthylène et de propylène, un caoutchouc butyle ou une combinaison de ceux-ci.

6. Caoutchouc recyclé selon l'une quelconque des revendications 1 à 5, dans lequel (b) le monomère à double liaison est le styrène.

7. Caoutchouc recyclé selon l'une quelconque des revendications 1 à 5, dans lequel (b) le monomère à double liaison est le styrène et l'isoprène, et le styrène et l'isoprène sont agencés de manière alternée ou aléatoire.

8. Caoutchouc recyclé selon l'une quelconque des revendications 1 à 5, dans lequel (b) le monomère à double liaison est l'isoprène.

9. Caoutchouc recyclé selon l'une quelconque des revendications 1 à 8, étant en outre réticulé par vulcanisation.
